# EUROPEAN PATENT APPLICATION

(11) **EP 4 559 702 A1**
(43) Date of publication of application: **28.05.2025**
(21) Application number: 23843020.1
(22) Date of filing: 19.07.2023
(51) Int. Cl.: B60D 1/02, B21D 39/00, B62D 25/08

(54) **FASTENING MEMBER, BONDED JOINT, AND METHOD FOR MANUFACTURING BONDED JOINT**

(30) Priority: 19.07.2022 JP 2022115114
(71) Applicant: NIPPON STEEL CORPORATION, Chiyoda-ku Tokyo 100-8071 (JP)
(72) Inventor: OKADA, Tohru, Tokyo 100-8071 (JP); MIZUTANI, Takumi, Tokyo 100-8071 (JP); FUJIMOTO, Hiroki, Tokyo 100-8071 (JP); KAWAI, Aoshi, Tokyo 100-8071 (JP)
(74) Representative: Vossius & Partner Patentanwälte Rechtsanwälte mbB
(86) International application number: PCT/JP2023/026475
(87) International publication number: WO 2024/019097

(57) **Abstract**

A fastening member includes a body portion, a first end portion, a second end portion, a first linking portion, and a second linking portion. A part of the body portion that is adjacent to the first linking portion and the first linking portion have outer diameters with different values. The outer diameters of the first end portion and the first linking portion are smaller than the outer diameter of the part of the body portion that is adjacent to the first linking portion. A part of the body portion that is adjacent to the second linking portion and the second end portion have outer diameters with different values. The thicknesses of the first end portion and the first linking portion as viewed in the axial direction are smaller than the thickness of the body portion.

## Description

### Technical Field

The present disclosure relates to a fastening member for screwing a bolt unit of a pintle hook, a bonded joint between the fastening member and a bonding target object, and a fastening member-attached automobile member.

### Background Art

Patent Literature 1 discloses an eyebolt nut as a fastening member for screwing a bolt unit of a pintle hook. The eyebolt nut has a cylindrical portion and an umbrella-shaped portion. A rear surface of the umbrella-shaped portion is bonded to an attachment surface of an automobile member.

### Citation List

### Patent Literature

Patent Literature 1: Japanese Patent Application Laid-Open (JP-A) No. 2013-099999

### SUMMARY OF INVENTION

### Technical Problem

An object of the disclosure is to provide a bonded joint having a new structure in which a fastening member for screwing a bolt unit of a pintle hook and an automobile member are bonded, a fastening member-attached automobile member, and a fastening member having a new structure used for both the bonded joint and the automobile member.

### Solution to Problem

The gist of the disclosure is as follows.
<1> There is provided a fastening member having a screw hole extending in an axial direction, the fastening member including: a body portion extending in the axial direction; a first end portion located at one side of the body portion in the axial direction; a second end portion located at another side of the body portion in the axial direction; a first linking portion that links the body portion and the first end portion; and a second linking portion that links the body portion and the second end portion. The screw hole is provided in at least one of the body portion or the second end portion. In the axial direction, a part of the body portion that is adjacent to the first linking portion and the first linking portion have outer diameters with different values, outer diameters of the first end portion and the first linking portion are smaller than the outer diameter of the part of the body portion that is adj acent to the first linking portion, a part of the body portion that is adjacent to the second linking portion and the second end portion have outer diameters with different values, and thicknesses of the first end portion and the first linking portion as viewed in the axial direction are smaller than a thickness of the body portion.
<2> **In** the fastening member according to <1>, thicknesses of the second end portion and the second linking portion are larger than the thicknesses of the first end portion and the first linking portion.
<3> In the fastening member according to <1> or <2>, in the axial direction, an outer diameter of a part of the second end portion that is adjacent to the second linking portion is larger than outer diameters of the part of the body portion that is adjacent to the second linking portion and the second linking portion.
<4> In the fastening member according to any one of <1> to <3>, in the axial direction, outer diameters of a part of the second end portion that is adjacent to the second linking portion and the second linking portion are smaller than an outer diameter of the part of the body portion that is adjacent to the second linking portion, and the thicknesses of the second end portion and the second linking portion as viewed in the axial direction are smaller than the thickness of the body portion.
<5> In the fastening member according to any one of <1> to <3>, shapes of circumferential surfaces of the body portion and the second linking portion are uniform in the axial direction.
<6> In the fastening member according to any one of <1> to <5>, the body portion has a body through-hole that is a through-hole extending in the axial direction, the first end portion and the first linking portion have a first through-hole communicating with the body through-hole in the axial direction, a minimum value of a diameter of the first through-hole is larger than a maximum value of a diameter of the body through-hole, as viewed in the axial direction, and in a case in which the body portion has the screw hole, a screw portion is provided in the body through-hole.
<7> In the fastening member according to any one of <1> to <6>, the body portion has a body through-hole that is a through-hole extending in the axial direction, the second end portion and the second linking portion have a second through-hole communicating with the body through-hole in the axial direction, a minimum value of a diameter of the second through-hole is larger than a maximum value of a diameter of the body through-hole, as viewed in the axial direction, in a case in which the body portion has the screw hole, a screw portion is provided in the body through-hole, and in a case in which the second end portion has the screw hole, a screw portion is provided in the second through-hole.
<8> There is provided a bonded joint including: a bonding target object; and a fastening member bonded to the bonding target object. The bonding target object has a first plate portion and a second plate portion facing the first plate portion, the first plate portion has a first hole, and the second plate portion has a second hole. The fastening member is a fastening member having a screw hole extending in an axial direction and includes a body portion extending in the axial direction, a first end portion located at one side of the body portion in the axial direction, a second end portion located at another side of the body portion in the axial direction, a first linking portion that links the body portion and the first end portion, and a second linking portion that links the body portion and the second end portion. The screw hole is provided in at least one of the body portion or the second end portion, and the first end portion is disposed at the one side in the axial direction with respect to the first plate portion. The second end portion is disposed on the other side in the axial direction with respect to the second plate portion, the first linking portion is disposed inside the first hole, the second linking portion is disposed inside the second hole, and the body portion is disposed between the first plate portion and the second plate portion. In the axial direction, an outer diameter of the first linking portion is smaller than an outer diameter of a part of the body portion that is adjacent to the first linking portion, a thickness of the first linking portion is smaller than a thickness of the part of the body portion that is adjacent to the first linking portion, an outer diameter of the first end portion is larger than a diameter of the first hole, a circumferential edge part of the first hole in the first plate portion is sandwiched between the body portion and the first end portion from both sides in the axial direction, and an outer diameter of the second end portion is larger than a diameter of the second hole, and a circumferential edge part of the second hole is supported by the second end portion.
<9> In the bonded joint according to <8>, an outer diameter of the second linking portion is smaller than an outer diameter of a part of the body portion that is adjacent to the second linking portion, a thickness of the second linking portion is smaller than a thickness of the part of the body portion that is adjacent to the second linking portion, the outer diameter of the second end portion is larger than the diameter of the second hole, and the circumferential edge part of the second hole in the second plate portion is sandwiched between the body portion and the second end portion from both sides in the axial direction.
<10> In the bonded joint according to <8> or <9>, the bonding target object is an automobile member, the automobile member has a closed cross-section structure in which a hat-shaped first plate and a substantially flat plate-shaped second plate are bonded to each other, the first plate has a top plate portion, a pair of vertical plate portions, and a pair of flange portions, the second plate has a facing portion facing the top plate portion and a pair of bonding portions bonded to the pair of flange portions, the top plate portion is the first plate portion, the facing portion is the second plate portion, and a plate thickness of the first plate is larger than a plate thickness of the second plate.
<11> In the bonded joint according to any one of <8> to <10>, the first hole has a polygonal shape.
<12> There is provided a method for manufacturing a bonded joint in which a bonding target object and a fastening member are bonded to each other, in which the bonding target object has a first plate portion and a second plate portion facing the first plate portion, and the first plate portion has a first hole, and the second plate portion has a second hole. The fastening member includes a screw hole extending in an axial direction, a body portion extending in the axial direction, a first end portion located at one side of the body portion in the axial direction, a second end portion located at another side of the body portion in the axial direction, a first linking portion that links the body portion and the first end portion, and a second linking portion that links the body portion and the second end portion. The screw hole is provided in at least one of the body portion or the second end portion. In the axial direction, a part of the body portion that is adjacent to the first linking portion and the first linking portion have outer diameters with different values, outer diameters of a part of the first end portion that is adjacent to the first linking portion and the first linking portion are smaller than the outer diameter of the part of the body portion that is adjacent to the first linking portion, a part of the body portion that is adjacent to the second linking portion and the second end portion have outer diameters with different values, and thicknesses of the first end portion and the first linking portion as viewed in the axial direction are smaller than a thickness of the body portion. The method includes: a step of preparing the bonding target object and the fastening member; a first step; and a second step. In the first step, the first end portion is disposed at the one side in the axial direction with respect to the first plate portion, the second end portion is disposed at the other side in the axial direction with respect to the second plate portion, the first linking portion is disposed inside the first hole, the second linking portion is disposed inside the second hole, the body portion is disposed between the first plate portion and the second plate portion, the part of the body portion that is adjacent to the first linking portion is brought into contact with a circumferential edge part of the first hole in the first plate portion from the other side in the axial direction, and a caulking preparation state is set in which a part of the second end portion that is adjacent to the second linking portion is brought into contact with a circumferential edge part of the second hole in the second plate portion from the other side in the axial direction, or the part of the body portion that is adj acent to the second linking portion is brought into contact with the circumferential edge part of the second hole in the second plate portion from the one side in the axial direction. In the second step, the first end portion is deformed by energizing, heating, and pressurizing the fastening member from both sides in the axial direction in the caulking preparation state to form a deformed portion, and the circumferential edge part of the first hole in the first plate portion is sandwiched between the body portion and the deformed portion from both sides in the axial direction.
<13> In the method for manufacturing a bonded joint according to <12>, in the fastening member, an outer diameter of the part of the second end portion that is adjacent to the second linking portion is larger than outer diameters of the part of the body portion that is adjacent to the second linking portion and the second linking portion, and an outer diameter of the second end portion is larger than a diameter of the second hole. In the caulking preparation state, the part of the second end portion that is adjacent to the second linking portion is brought into contact with the circumferential edge part of the second hole in the second plate portion from the other side in the axial direction.
<14> In the method for manufacturing a bonded joint according to <12> or <13>, in the fastening member, outer diameters of the part of the second end portion that is adjacent to the second linking portion and the second linking portion are smaller than an outer diameter of the part of the body portion that is adjacent to the second linking portion, and thicknesses of the second end portion and the second linking portion as viewed in the axial direction are smaller than the thickness of the body portion. In the caulking preparation state, the part of the body portion that is adjacent to the second linking portion is brought into contact with the circumferential edge part of the second hole in the second plate portion from the one side in the axial direction. In the second step, further, the second end portion is deformed by energizing, heating, and pressurizing the fastening member from both sides in the axial direction in the caulking preparation state to form a second deformed portion, and the circumferential edge part of the second hole in the second plate portion is sandwiched between the body portion and the second deformed portion from both sides in the axial direction.

### BRIEF DESCRIPTION OF DRAWINGS

Fig. 1 is a perspective view showing a fastening member according to an embodiment.
Fig. 2 is a cross-sectional view showing the fastening member of the embodiment.
Fig. 3 is a cross-sectional view showing an automobile member of the embodiment.
Fig. 4 is a cross-sectional view showing a state (caulking preparation state) in which the fastening member is disposed with respect to the automobile member.
Fig. 5 is a cross-sectional view showing a state (bonded joint) in which a fastening member is bonded to the automobile member.
Fig. 6 is a view showing a modification example of a first hole.
Fig. 7 is a cross-sectional view corresponding to Fig. 4, and shows a modification example of the fastening member.
Fig. 8 is a cross-sectional view corresponding to Fig. 5, and shows a modification example of the bonded joint.

### DESCRIPTION OF EMBODIMENTS

Hereinafter, embodiments of the disclosure will be described.

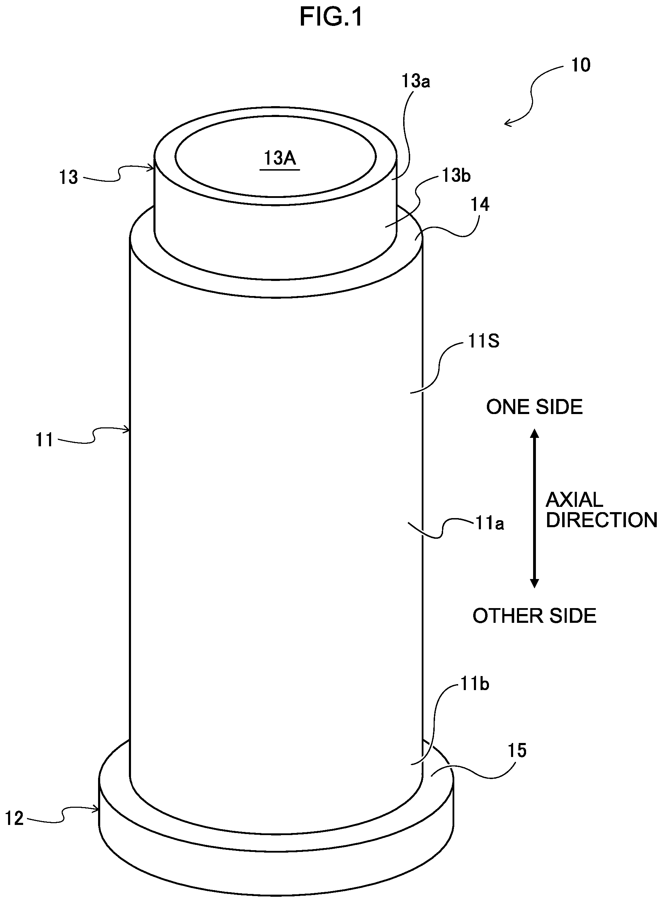

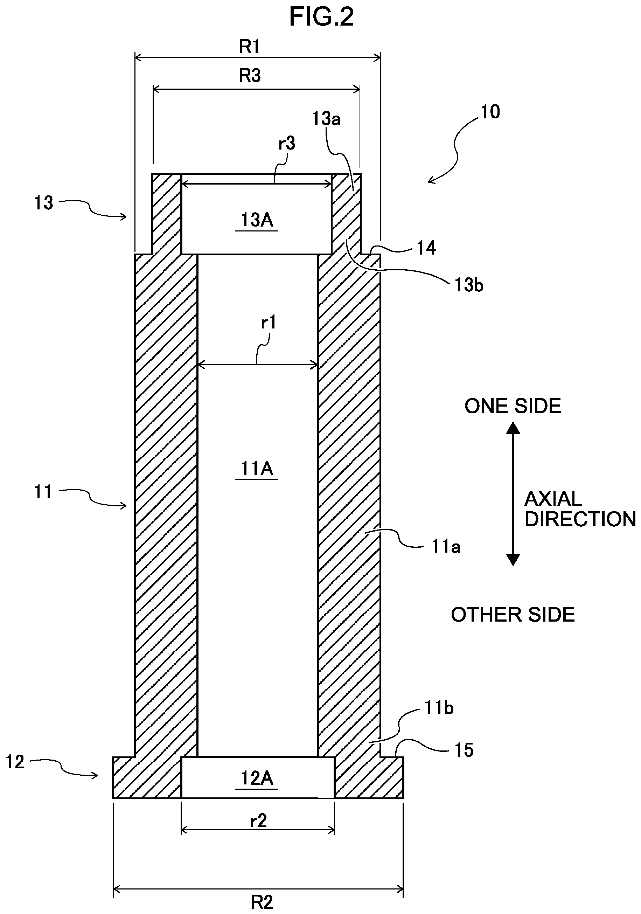

First, a preferred embodiment of a fastening member 10 will be described with reference to Figs. 1, 2, and the like.

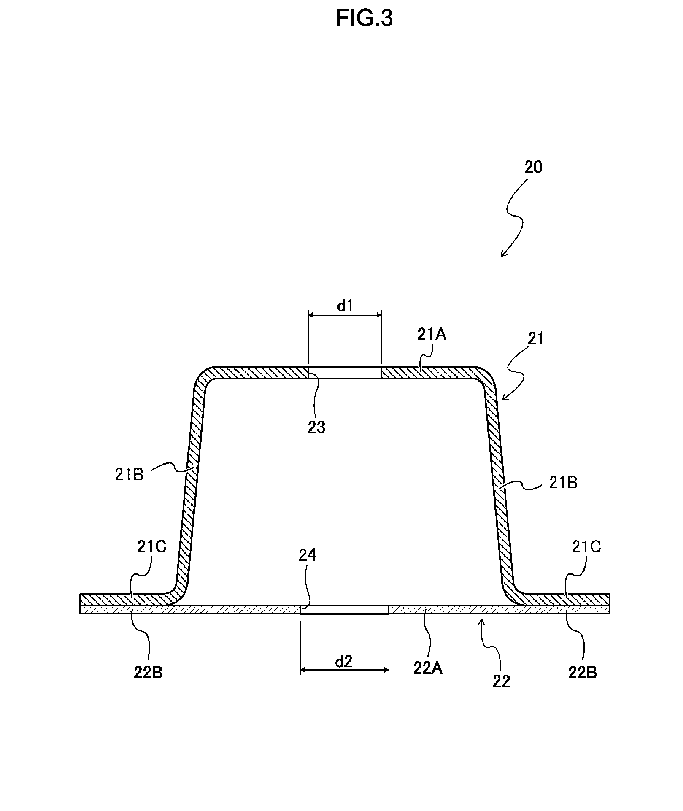

The fastening member 10 is preferably used by being bonded to the automobile member 20 (see Fig. 3). For example, the fastening member 10 is a fastening member (also referred to as a pintle nut) for screwing a bolt unit of a pintle hook (not shown). The pintle hook is a hook used for towing an automobile.

The fastening member 10 includes a shaft portion 11, a flange portion 12, and a caulking portion 13.

The shaft portion 11 has a circular columnar shape. A circular through-hole 11A penetrating the shaft portion 11 is formed in the shaft portion 11. Therefore, the shaft portion 11 can also be described as cylindrical. The through-hole 11A of the shaft portion 11 is a screw hole (not shown).

The flange portion 12 is provided on the other side of the shaft portion 11 in an axial direction. The flange portion 12 has a circular columnar shape formed coaxially with the shaft portion 11. An outer diameter R2 of the flange portion 12 is larger than an outer diameter R1 of the shaft portion 11. A circular through-hole 12A penetrating the flange portion 12 is formed in the flange portion 12. Therefore, the flange portion 12 can also be described as cylindrical. The through-hole 12A of the flange portion 12 is formed coaxially with the through-hole 11A of the shaft portion 11, and is connected to the through-hole 11A of the shaft portion 11. In the present embodiment, the through-hole 12A of the flange portion 12 is not a screw hole, but is not limited thereto. An inner diameter r2 of the flange portion 12 is larger than an inner diameter r1 (a maximum diameter or a root diameter of the screw hole) of the shaft portion 11.

The caulking portion 13 is provided on one side of the shaft portion 11 in the axial direction. The caulking portion 13 has a circular columnar shape formed coaxially with the shaft portion 11. An outer diameter R3 of the caulking portion 13 is smaller than the outer diameter R1 of the shaft portion 11. A circular through-hole 13A penetrating the caulking portion 13 is formed in the caulking portion 13. Therefore, the caulking portion 13 can also be described as cylindrical. The through-hole 13A of the caulking portion 13 is formed coaxially with the through-hole 11A of the shaft portion 11, and is connected to the through-hole 11A of the shaft portion 11. Therefore, the through-hole 11A of the shaft portion 11, the through-hole 12A of the flange portion 12, and the through-hole 13A of the caulking portion 13 constitute the through-holes 11A, 12A, and 13Apenetrating the fastening member 10 in an axial direction thereof. In the present embodiment, the through-hole 13A of the caulking portion 13 is not a screw hole, but is not limited thereto. In the present embodiment, an inner diameter r3 of the caulking portion 13 is larger than the inner diameter r1 (the maximum diameter or the root diameter of the screw hole) of the shaft portion 11, but is not limited thereto. A thickness ((R3 - r3)/2) of the caulking portion 13 is smaller than a thickness ((R1 - r1)/2) of the shaft portion 11.

The entire fastening member 10 is integrally made of the same material. The fastening member 10 is made of steel, for example.

A first end surface 14 is formed on an end surface of the shaft portion 11 on the one side in the axial direction. The first end surface 14 of the shaft portion 11 is a surface formed around the caulking portion 13 in a case in which the fastening member 10 is viewed from the one side in the axial direction, and is a surface that extends annularly.

A second end surface 15 is formed on an end surface of the flange portion 12 on the one side in an axial direction thereof. The second end surface 15 of the flange portion 12 is a surface formed around the shaft portion 11 in a case in which the fastening member 10 is viewed from the one side in the axial direction, and is a surface that extends annularly.

### (Automobile Member 20)

A "bonding target object" in the disclosure is preferably a member having a closed cross-section structure including two plate-shaped members facing each other. The caulking portion 13 of the fastening member 10 is caulked and bonded to one of the two plate-shaped members, the flange portion 12 is supported by the other, and the shaft portion 11 is fixed between the two plate-shaped members. An automobile member 20 will be described as a preferred embodiment of the "bonding target object" by way of example with reference to Fig. 3.

The automobile member 20 is, for example, a frame member (bumper reinforcement member) extending in a vehicle width direction at a position of a front end portion or a rear end portion of an automobile, and may be another automobile member. For example, the automobile member 10 may be a member for supporting a battery box mounted on an automobile. In this case, the fastening member 10 is used to fasten the battery box.

The automobile member 20 includes a first member 21 and a second member 22. The first member 21 has a hat shape. That is, the first member 21 has a top plate portion 21A, a pair of vertical plate portions 21B, and a pair of flange portions 21C. The second member 22 has a substantially flat plate shape. The second member 22 has a facing portion 22A facing the top plate portion 21A and a pair of bonding portions 22B bonded to the pair of flange portions 21C. Consequently, the automobile member 20 has a closed cross-section structure extending in a direction perpendicular to the paper surface of the drawing, as a longitudinal direction. In the shown example, a plate thickness of the second member 22 is smaller than a plate thickness of the first member 21. The first member 21 and the second member 22 are, for example, steel plates. Either one or both of the first member 21 and the second member 22 may be a high-tensile steel plate of 1,800 MPa or higher, or may be a hot-stamped steel plate. For example, the automobile member 20 is disposed in a posture in which the second member 22 side (a lower side in Fig. 3) of the first member 21 and the second member 22 is directed outward in a vehicle front-rear direction.

A first hole 23 is formed in the top plate portion 21A of the first member 21. The first hole 23 has a circular shape. A diameter d1 of the first hole 23 is slightly larger than the outer diameter R3 of the caulking portion 13 and is smaller than the outer diameter R1 of the shaft portion 11. Hereinafter, the top plate portion 21A of the first member 21 may be referred to as a first plate portion 21A.

A second hole 24 is formed in the facing portion 22A of the second member 22. The second hole 24 has a circular shape. A diameter d2 of the second hole 24 is slightly larger than the outer diameter R1 of the shaft portion 11 and is smaller than the outer diameter R2 of the flange portion 12. Hereinafter, the facing portion 22A of the second member 22 may be referred to as a second plate portion 22A.

### (Bonding Method and Manufacturing Method)

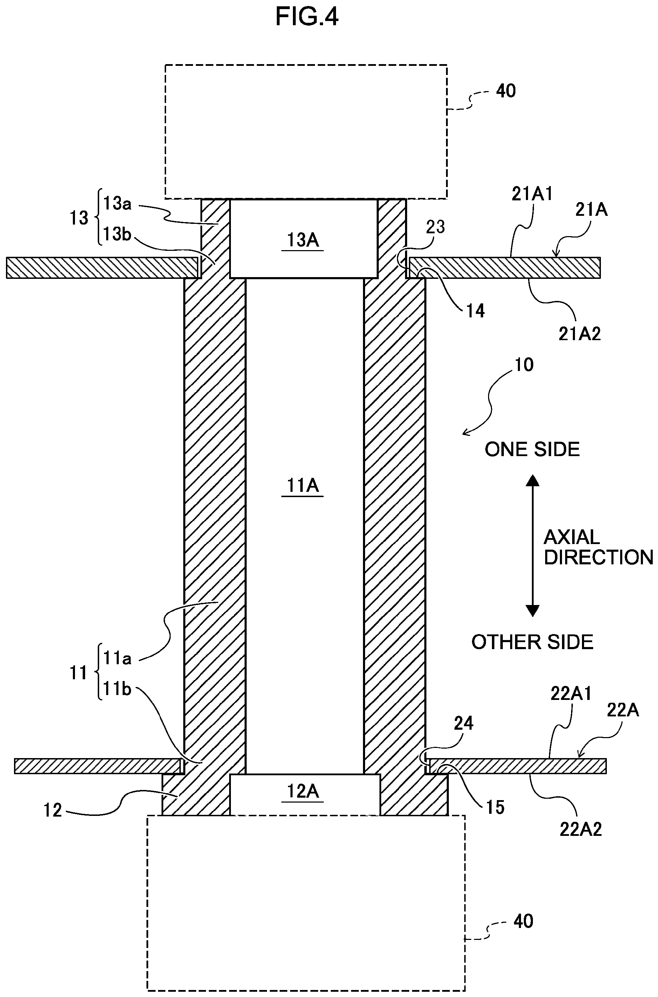

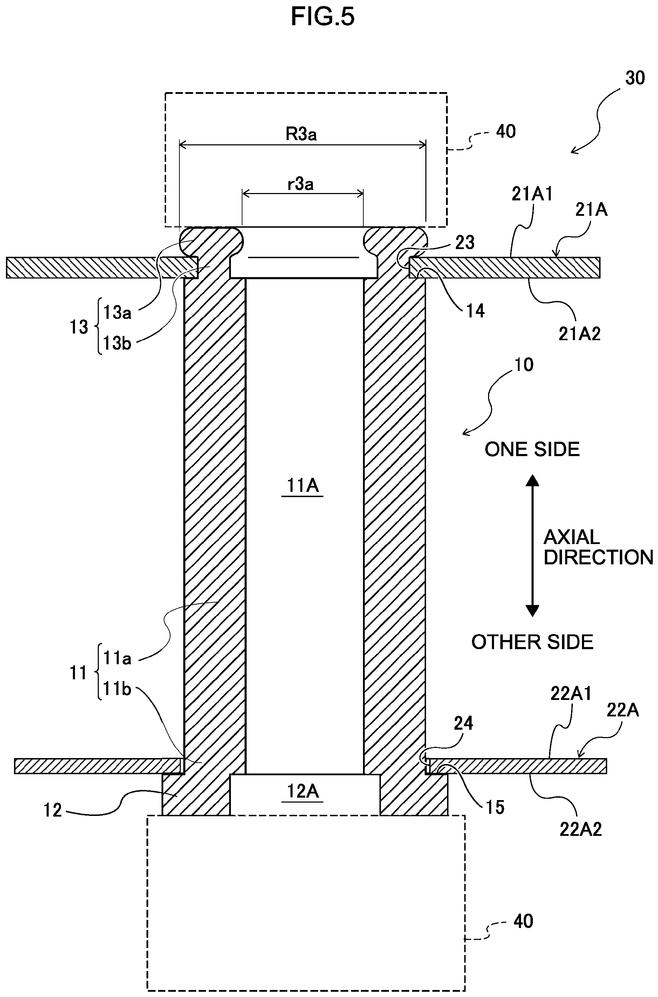

Subsequently, a method for bonding the fastening member 10, that is, a method for manufacturing a fastening member-attached automobile member 30 (also referred to as a bonded joint 30) will be described with reference to Figs. 4 and 5.

The method for bonding the fastening member 10 basically follows the following procedure.

First step: A state is set in which the fastening member 10 is disposed at a predetermined position with respect to the automobile member 20 (a caulking preparation state, see Fig. 4).

Second step: A caulking step is performed in the caulking preparation state, and the fastening member-attached automobile member 30 (bonded joint 30) is obtained (see Fig. 5).

In the first step, the fastening member 10 is inserted into the automobile member 20 from the second hole 24 side of the automobile member 20, with the caulking portion 13 side at the front. Specifically, the caulking portion 13 and the shaft portion 11 of the fastening member 10 are made to pass through the second hole 24 of the automobile member 20, and further the caulking portion 13 is made to pass through the first hole 23, so that a distal portion 13a of the caulking portion 13 projects from a first surface 21A1 of the first plate portion 21A. The first end surface 14 of the shaft portion 11 of the fastening member 10 is brought into contact with a second surface 21A2 of the top plate portion 21A.

The caulking preparation state shown in Fig. 4 will be described in detail as follows.

A proximal portion 13b of the caulking portion 13 is disposed in the first hole 23. A part (distal portion 13a) other than the proximal portion 13b of the caulking portion 13 projects from the first hole 23 toward the first surface 21A1 side of the first plate portion 21A, and is positioned on the first surface 21A1 side of the first plate portion 21A.

The first end surface 14 of the shaft portion 11 is in contact with a second surface 21A2 of the first plate portion 21A. The first end surface 14 of the shaft portion 11 is in contact with a circumferential edge part of the first hole 23 in the first plate portion 21A.

A proximal portion 11b (end portion on the other side in the axial direction) of the shaft portion 11 is disposed in the second hole 24. Most part (general body portion 11a) of the shaft portion 11 except for the proximal portion 11b is positioned inside the automobile member 20. In other words, the general body portion 11a of the shaft portion 11 is positioned between the first member 21 and the second member 22.

The flange portion 12 is positioned outside the automobile member 20. In other words, the flange portion 12 is disposed on the other side of the second member 22 in the axial direction. The second end surface 15 of the flange portion 12 is in contact with or close to a second surface 22A2 of the second plate portion 22A. The second end surface 15 of the flange portion 12 is in contact with or close to the circumferential edge part of the second hole 24 in the second plate portion 22A.

Hereinafter, the general body portion 11a of the shaft portion 11 may be referred to as a body portion 11a, the distal portion 13a of the caulking portion 13 may be referred to as a first end portion 13a, the proximal portion 13b of the caulking portion 13 may be referred to as a first linking portion 13b, the proximal portion 11b of the shaft portion 11 may be referred to as a second linking portion 11b, and the flange portion 12 may be referred to as a second end portion 12.

When these terms are used to describe the structure of the fastening member 10 again, the description is as follows.

The body portion 11a has the first end surface 14. The first end portion 13a forms an end portion on the one side of the fastening member 10 in the axial direction. The first linking portion 13b links the body portion 11a and the first end portion 13a. The second end portion 12 forms an end portion of the fastening member 10 on the other side in the axial direction. The second linking portion 11b links the body portion 11a and the second end portion 12.

At least one of the body portion 11a and the second end portion 12 has a screw hole.

In the axial direction, a part of the body portion 11a that is adjacent to the first linking portion 13b and the first linking portion 13a have outer diameters with different values. In addition, in the axial direction, outer diameters of the first end portion 13a and the first linking portion 13a are smaller than the outer diameter of the part of the body portion 11a adjacent to the first linking portion 13b. According to such a configuration, in the caulking preparation state, the first end portion 13a is disposed on the one side in the axial direction with respect to the first plate portion 21A, and the part of the body portion 11a adjacent to the first linking portion 13a can be brought into contact with the circumferential edge part of the first hole 23 in the first plate portion 21A from the other side in the axial direction.

Further, in the axial direction, a part of the body portion 11a that is adjacent to the second linking portion 11b and the second end portion 12 have outer diameters with different values. According to such a configuration, in the caulking preparation state, a part of the second end portion 12 that is adjacent to the second linking portion 11b can be brought into contact with a circumferential edge part of the second hole 23 in the second plate portion 22A from the other side in the axial direction. Alternatively, the part of the body portion 11a adjacent to the second linking portion 11b can be brought into contact with the circumferential edge part of the second hole 23 in the second plate portion 22A from the one side in the axial direction. That is, according to the disclosure, in the caulking preparation state, the fastening member can be fixed in the state of being in contact with and supported by both of the two plate-shaped members facing each other.

In the second step, the caulking step is performed in the caulking preparation state. The caulking step described herein refers to a step in which the fastening member 10 is sandwiched between a pair of electrodes 40 from both sides in the axial direction, and energization heating and pressurization are performed. By performing the caulking step, the caulking portion 13 is partially deformed. This is because the caulking portion 13 has a smaller thickness (smaller cross-sectional area) than the shaft portion 11 and the flange portion 12, thus having low proof stress in the first place, and being partially heated and softened by energization. Specifically, when the fastening member 10 is energized and heated in the axial direction, a current density of the caulking portion 13 having the thickness smaller than that of the shaft portion 11 becomes higher than that of the shaft portion 11. Consequently, the caulking portion 13 is efficiently heated and softened faster than other regions. According to such a configuration, the caulking portion 13 can be deformed in a short time. Here, the thickness of the caulking portion 13 is (R3 - r3)/2, the thickness of the shaft portion 11 is (R1 - r1)/2, and the thickness of the flange portion 12 is (R2 - r2)/2. As shown in Fig. 2, R3 represents an outer diameter of the caulking portion 13, r3 represents an inner diameter of the caulking portion 13, R1 represents an outer diameter of the shaft portion 11, and r1 represents an inner diameter (maximum diameter) of the shaft portion. The thickness of the caulking portion 13 is preferably 80% or smaller of the thickness of the shaft portion 11. In a case in which the outer diameter or the inner diameter is not uniform in the axial direction, the thickness is defined by a maximum value. For example, in a case in which the inner diameter r3 of the caulking portion 13 is not uniform, (R3 - r3min)/2 is set as the thickness of the caulking portion 13, and if a value thereof is smaller than the thicknesses of the shaft portion 11 and the flange portion 12, caulking can be appropriately performed. Hereinafter, the deformed caulking portion 13 shown in Fig. 5 may be referred to as a deformed portion 13.

Examples of a material of the electrode can include chromium copper, alumina-dispersed copper, and beryllium copper, but the material is not limited thereto, and an electrode material for resistance welding can be widely used. An outer diameter of the electrode may be equal to or larger than the outer diameter of the caulking portion 13, and is preferably equal to or larger than the outer diameter of the flange portion 12. A distal end of the electrode may have a flat shape or an R shape. In the latter case, when the electrode has too small a radius, a temperature distribution is likely to occur in a radial direction of the pintle nut, and thus the radius of the electrode is preferably 100 mm or larger.

Fig. 5 shows the fastening member-attached automobile member 30 (bonded joint 30).

With the caulking portion 13 (see Fig. 4) before deformation as a reference, the first end portion 13a is deformed to expand radially outward and also expand radially inward. The first linking portion 13b is positioned inside the first hole 23, and is deformed to expand radially inward while the radially outward expansion thereof is curbed by the first plate portion 21A.

Regarding the deformed caulking portion 13, an outer diameter R3a of the first end portion 13a is larger than the outer diameter R3 of the caulking portion 13 before the deformation, and is larger than the diameter d1 of the first hole 23. Consequently, the circumferential edge part of the first hole 23 in the first plate portion 21A is sandwiched between the body portion 11a and the deformed caulking portion 13 (first end portion 13a).

An inner diameter r3a of the deformed caulking portion 13 is, for example, smaller than the inner diameter r3 of the caulking portion 13 before the deformation, and is larger than the inner diameter r1 (maximum diameter) of the shaft portion 11.

### <Operations and Effects>

Next, operations and effects of the present embodiment will be described.

As shown in Figs. 1, 2, and the like, the fastening member 10 of the present embodiment includes the main body portion 11a having the screw hole (through-hole 11A) formed extending in the axial direction, the first end portion 13a forming the end portion of the fastening member 10 at the one side in the axial direction, the second end portion 12 forming the end portion of the fastening member 10 at the other side in the axial direction, the first linking portion 13b linking the main body portion 11a and the first end portion 13a, and the second linking portion 11b linking the main body portion 11a and the second end portion 12. The first end surface 14 facing toward the one side in the axial direction is formed at the end surface of the main body portion 11a at the one side in the axial direction.

Therefore, a predetermined disposition state (caulking preparation state, see Fig. 4) can be obtained by disposing the fastening member 10 with respect to the bonding target object 20. The predetermined disposition state (caulking preparation state) described herein means a state in which the first end portion 13a is disposed at the one side in the axial direction with respect to the first plate portion 21A, the second end portion 12 is disposed at the other side in the axial direction with respect to the second plate portion 22A, and the first end surface 14 is brought into contact with the circumferential edge part of the first hole 23 in the first plate portion 21A from the other side in the axial direction.

In the present embodiment, as shown in Figs. 4 and 5, the first end portion 13a and the first linking portion 13b are configured to be caulked by the caulking step in which the fastening member 10 is sandwiched by the pair of electrodes 40 from both sides in the axial direction, and is energized, heated, and pressurized.

Therefore, by performing the caulking step in the caulking preparation state (see Fig. 4), it is possible to realize the state in which the first end portion 13a and the first linking portion 13b are caulked to form the deformed portion 13 (see Fig. 5), and the circumferential edge part of the first hole 23 in the first plate portion 21A is sandwiched between the main body portion 11a and the first end portion 13a of the deformed portion 13 from both sides in the axial direction. Consequently, the fastening member 10 is bonded to the bonding target object 20.

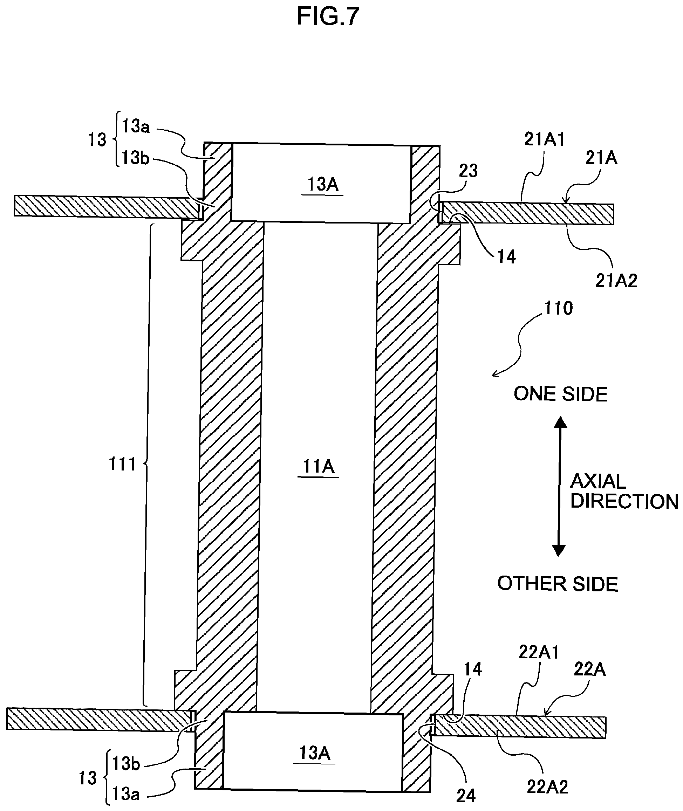

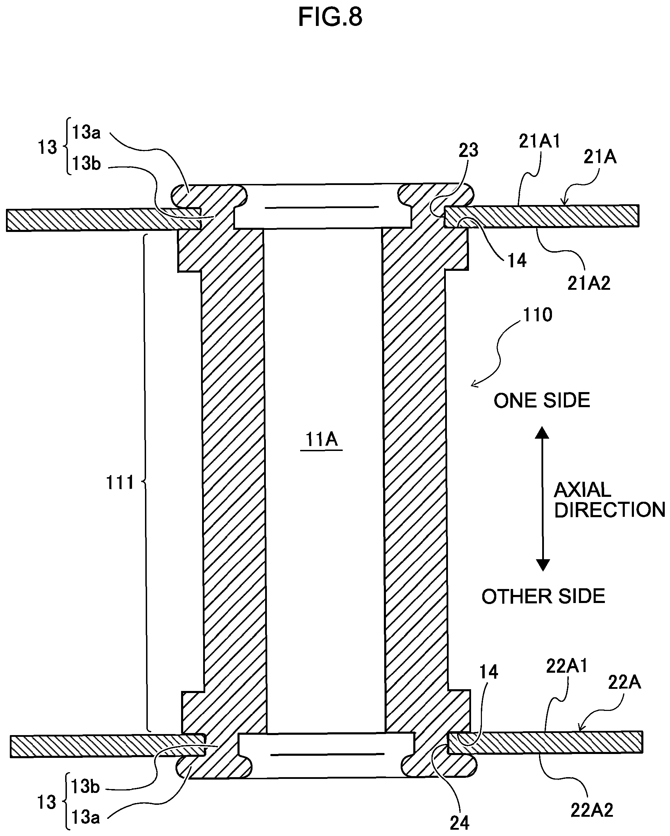

In the present embodiment, as shown in Fig. 5, the second end portion 12 and the second linking portion 11b are configured not to be deformed even by the caulking step. Therefore, a bonding step is easily performed as compared to an aspect in which both the first end portion 13a and the second end portion 12 are configured to be caulked (see Figs. 7 and 8).

Such a configuration can be realized by increasing the thicknesses of the second end portion 12 and the second linking portion 11b (by increasing the cross-sectional areas) with respect to the thickness of the caulking portion 13 when viewed from the axial direction. When the fastening member 10 is energized and heated in the axial direction, the current density of the caulking portion 13 having a thickness smaller than those of the second end portion 12 and the second linking portion 11b becomes higher than that of the current density of the second end portion 12 and the second linking portion 11b. Consequently, the caulking portion 13 is efficiently heated and softened faster than other regions. According to such a configuration, the deformation of the caulking portion 13 and the caulking thereof are completed before the second end portion 12 and the second linking portion 11b are softened and deformed.

In the present embodiment, as shown in Fig. 4, the body portion 11a is configured to be able to pass through the second hole 24 formed in the bonding target object 20. Therefore, the fastening member 10 can be disposed with respect to the automobile member 20 in a state in which the first member 21 and the second member 22 constituting the automobile member 20 are bonded.

In the present embodiment, as shown in Fig. 1, a circumferential surface 11S of the body portion 11a and the second linking portion 11b has a uniform shape in the axial direction. Therefore, in an aspect in which the body portion 11a passes through the second hole 24 and the second linking portion 11b is disposed in the second hole 24, the proof stress of the body portion 11a and the second linking portion 11b is likely to be ensured. That "the circumferential surfaces 11S of the body portion 11a and the second linking portion 11b has the uniform shape in the axial direction" means that, for example, the outer diameter of the body portion 11a and the second linking portion 11b is uniform in the axial direction.

In the present embodiment, as shown in Fig. 2, the outer diameter R2 of the second end portion 12 is larger than the outer diameter R1 of the body portion 11a and the second linking portion 11b. A value of r2 is selected such that the cross-sectional area (the thickness viewed from the axial direction) of the second end portion is larger than the cross-sectional area (the thickness viewed from the axial direction) of the body portion and the second linking portion, and is equal to or larger than r1. According to this configuration, deformation of the second end portion 12 due to the caulking step can be curbed.

In the present embodiment, as shown in Fig. 4, the first linking portion 13b and the first end portion 13a are formed in a cylindrical shape. Therefore, as compared with an aspect in which the first linking portion 13b and the first end portion 13a are not formed in the cylindrical shape, the first linking portion 13b and the first end portion 13a are appropriately caulked, and the bonding reliability is improved. Here, the aspect in which the first linking portion 13b and the first end portion 13a are not formed in the cylindrical shape means a columnar shape without a through-hole.

In the present embodiment, the through-holes 11A, 12A, and 13A penetrating the first end portion 13a, the first linking portion 13b, the body portion 11a, the second linking portion 11b, and the second end portion 12 in the axial direction are formed. Therefore, the fastening member 10 can be easily manufactured by a lathe or the like.

In the present embodiment, the screw holes are formed not only in a part of the through-holes 11A, 12A, and 13A corresponding to the body portion 11a but also in a part thereof corresponding to the second linking portions 11b. Therefore, the part where the screw hole is formed can be lengthened, and accordingly the fastening strength with the bolt can be ensured.

When the inner diameter (an average value in a case in which the inner diameter is not uniform) of the first linking portion 13b is larger than the inner diameter (an average value in a case in which the inner diameter is not uniform) of the first end portion 13a, a deformation amount of the first linking portion 13b (the proximal portion 13b of the caulking portion 13) and the part of the first end portion 13a adjacent to the first linking portion 13b is likely to be small. When the deformation amount of the first linking portion 13b and the part of the first end portion 13a adjacent to the first linking portion 13b is small, there is a possibility that the circumferential edge part of the first hole 23 in the first plate portion 21A will not be appropriately sandwiched between the body portion 11a and the deformed caulking portion 13. That is, there is a possibility that the deformed portion 13 will not have an appropriate shape.

Hence, in the present embodiment, as shown in Fig. 2, the inner diameter r3 of the first linking portion 13b is uniform in the axial direction, the inner diameter r3 of the first end portion 13a is uniform in the axial direction, and the inner diameter r3 of the first linking portion 13b is the same as the inner diameter r3 of the first end portion 13a.

Therefore, as compared with an aspect in which the inner diameter (an average value in a case in which the inner diameter is not uniform) of the first linking portion 13b is larger than the inner diameter (an average value in a case in which the inner diameter is not uniform) of the first end portion 13a, the first linking portion 13b (the proximal portion 13b of the caulking portion 13) can be sufficiently deformed, and the deformed portion 13 having an appropriate shape can be obtained.

In the present embodiment, as shown in Fig. 2, the minimum value r3 (a constant value in the present embodiment) of the inner diameter r3 of both the first linking portion 13b and the first end portion 13a in the axial direction is larger than the maximum diameter r1 of the screw hole (through-hole 11A). Therefore, the deformed portion 13 (see Fig. 5) deformed to expand radially inward is curbed from overlapping the screw hole 11A when viewed from the axial direction. This is particularly preferable in a case in which the bolt unit of the pintle hook is screwed in from the one side in the axial direction. A difference between both the diameters (r1 and r3) is preferably 1 mm or larger, and more preferably 5 mm or larger.

In the present embodiment, as shown in Fig. 2, the inner diameter r2 of the second end portion 12 is larger than the inner diameter r1 of the body portion 11a and the second linking portion 11b, and the outer diameter R2 of the second end portion 12 is larger than the outer diameter R1 of the body portion 11a and the second linking portion 11b.

Since the inner diameter r2 of the second end portion 12 is larger than the inner diameter r1 of the body portion 11a and the second linking portion 11b, the deformed second end portion 12 and the screw hole 11A are prevented from overlapping each other when viewed from the axial direction, even in a case in which the second end portion 12 is slightly deformed by the caulking step. By selecting the value of r2 such that the outer diameter R2 of the second end portion 12 is larger than the outer diameter R1 of the body portion 11a and the second linking portion 11b, and such that the cross-sectional area (the thickness viewed from the axial direction) at the second end portion is larger than the cross-sectional area (the thickness viewed from the axial direction) of the body portion and the second linking portion and is equal to or larger than r1, deformation of the second end portion 12 by the caulking step is curbed.

In addition, by increasing the outer diameter R2 of the second end portion 12 to form the flange portion 12, the flange portion 12 and the second surface 22A2 of the second plate portion 22A can be brought into contact with each other, and as a result, an effect that inclination of the fastening member 10 can be curbed is also obtained. Such a configuration is particularly effective in a case in which a difference between R1 and R3 is small.

In addition, in the bonded joint of the present embodiment, as shown in Fig. 5, the first end surface 14 of the body portion 11a is brought into contact with the circumferential edge part of the first hole 23 in the first plate portion 21A from the other side in the axial direction. The first end portion 13a and the first linking portion 13b become the deformed portion 13, and the circumferential edge part of the first hole 23 in the first plate portion 21A is sandwiched between the body portion 11a and the deformed portion 13 from both sides in the axial direction.

Therefore, the bonding target object 20 and the fastening member 10 are appropriately bonded. Whether or not a part of a specific bonded joint corresponds to the "deformed portion 13" (pressurized and deformed caulking portion 13) can be checked, for example, by comparing structures of the part and the body portion 11a through cross-sectional observation. Further, the structures can be checked by comparing the hardness of the part with the hardness of the body portion 11a. In this case, the structure and hardness of the body portion 11a are desirably measured from a central portion thereof in the axial direction. For example, in a case in which a measurement load is set to 1 kgf or larger and the body portion 11a and the caulking portion 13 are measured at five or more points, average values thereof are compared, and whether differences in hardness are HV10 or higher is checked.

In the bonded joint of the present embodiment, as shown in Fig. 5, since the second linking portion 11b of the fastening member 10 is disposed in the second hole 24 of the second plate portion 22A, the inclination of the fastening member 10 around a bonded part with the first plate portion 21A is curbed.

In the present embodiment, as shown in Fig. 3, a plate thickness of the first member 21 is larger than a plate thickness of the second member 22. Since the plate thickness of the hat-shaped first member 21 is larger than the plate thickness of the second member 22, the strength of the automobile member 20 can be efficiently improved. Since the fastening member 10 is caulked to the first member 21 having the larger plate thickness, the joint strength is likely to be ensured as compared with a case in which the fastening member is caulked to the second member 22 having the smaller plate thickness.

### (Supplementary Description)

Although the fastening member, the bonded joint, and the fastening member-attached automobile member of the disclosure have been described using the embodiments, the disclosure is not limited to the embodiments. The following supplementary description is provided just in case.

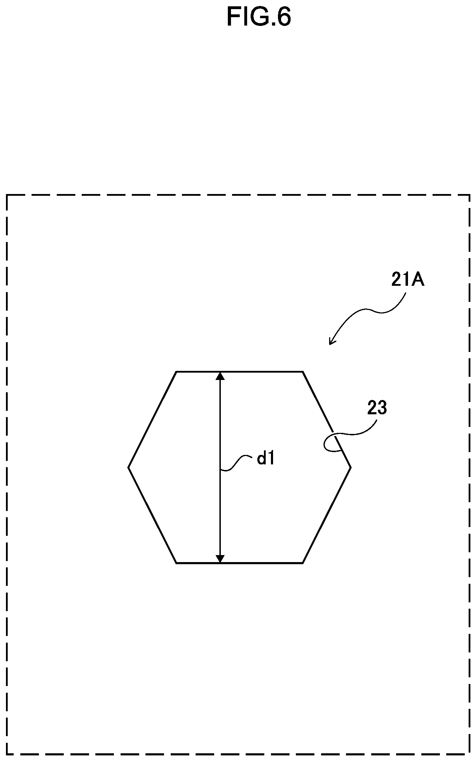

In the embodiments, the first hole 23 and the second hole 24 have been described as circular, but the first hole and the second hole of the disclosure is not necessarily circular. For example, as shown in Fig. 6, the shape of the first hole 23 may be a hexagon. Consequently, the cylindrical caulking portion 13 (particularly, the proximal portion 13b) is deformed to have the hexagonal shape of the first hole 23, and as a result, the rotation of the fastening member 10 around the axis with respect to the automobile member 20 is further curbed. In this case, it is assumed that a diameter of a circle inscribed in the hexagon formed by the first hole 23 is the diameter d1 of the first hole 23, the diameter d1 of the first hole 23 may be equal to or slightly larger than the outer diameter R3 of the caulking portion 13.

The shape of the first hole 23 for obtaining such an effect is not limited to the hexagon, and may be a polygon (for example, an octagon) other than a hexagon. The shape of the first hole 23 may be a shape other than a polygon (a shape that curbs the rotation of the fastening member 10 around the axial direction with respect to the bonding target object 20).

In a case in which the shape of the first hole 23 is a shape other than a circle, the shape (the shape viewed from the axial direction) of the caulking portion 13 may be changed to a shape similar to the shape of the first hole 23.

In the embodiments, the example has been described in which all of the shaft portion 11, the flange portion 12, and the caulking portion 13 have a circular columnar shape. In other words, in the embodiments, the example has been described in which all of the body portion 11a, the first end portion 13a, the second end portion 12, the first linking portion 13b, and the second linking portion 11b have the circular columnar shape. However, the disclosure is not limited thereto. The body portion 11a, the first end portion 13a, the second end portion 12, the first linking portion 13b, and the second linking portion 11b may be individually changed to a hexagonal columnar shape or a rectangular columnar shape other than the hexagonal columnar shape. For example, in a case in which the body portion 11a has a polygonal columnar shape, a diameter of a circle circumscribing the polygon is considered as the outer diameter of the body portion 11a.

The dimensions and the like of the fastening member 10 and the automobile member 20 described in the embodiments are not particularly limited. However, the following dimensions and the like are preferable.

The bolt units that can be screwed into the screw holes formed in the fastening member 10 are, for example, from M10 to M30. Thread cutting pitches of the screw holes formed in the fastening member 10 are, for example, from 1.5 to 3.0 mm.

The thickness ((R1 - r1)/2) of the shaft portion 11 is preferably from 3 to 20 mm, and more preferably from 5 to 15 mm. An axial dimension of the shaft portion 11 is, for example, from 30 to 200 mm.

The inner diameter of the flange portion 12 is preferably equal to or larger than the inner diameter r1 of the shaft portion 11, and is, for example, larger than the inner diameter of the shaft portion by 0.5 mm. The outer diameter of flange 12 is preferably larger than the outer diameter R1 of the shaft portion 11 by 2 mm or more in consideration of attachment tolerance. An axial dimension of the flange portion 12 is, for example, from 2 to 10 mm.

The thickness (R3 - r3)/2) of the caulking portion 13 is, for example, from 2 to 10 mm. An axial dimension of the caulking portion 13 is not particularly limited, but if the axial dimension is too small, the deformed portion 13 (see Fig. 5) has a defective shape, and if the axial dimension is too long, the shape of the deformed portion 13 becomes unstable. When a length of the caulking portion 13 is represented by H and the thickness thereof is represented by T, H/T is preferably in a range of from 2 to 10, and more preferably in a range of from 3 to 6.

As described in the embodiments, the inner diameter r2 of the flange portion 12 (the second end portion 12) is preferably equal to or larger than the inner diameter r1 of the shaft portion 11. However, in a case in which the pintle hook is screwed in from the one side in the axial direction, the inner diameter r2 of the flange portion 12 (the second end portion 12) may be smaller than the inner diameter r1 of the shaft portion 11. The through-hole 12A is not necessarily formed in the second end portion 12.

In the embodiments, the outer diameter R2 of the flange portion 12 (the second end portion 12) is larger than the outer diameter R1 of the shaft portion 11, but the second end portion of the disclosure is not limited thereto. For example, the outer diameter R2 of the second end portion 12 may be the same as the outer diameter R1 of the shaft portion 11. In this case, the second end portion 12 cannot be referred to as the flange portion 12.

In the embodiments, the example has been described in which the fastening member 10 is made of steel, but the fastening member of the disclosure may be made of metal other than steel.

In the embodiments, the example has been described in which the caulking portion 13 is formed in the cylindrical shape (that is, the example in which the through-hole 13A is formed in the first end portion 13a and the first linking portion 13b), but the first end portion and the first linking portion of the disclosure are not limited thereto. For example, while the first end portion is formed in the cylindrical shape, the first linking portion is not necessarily formed in the cylindrical shape. For example, both the first end portion and the second linking portion are not necessarily formed in the cylindrical shape.

Even in the case in which the caulking portion 13 is formed in the cylindrical shape, the caulking portion 13 is not necessarily formed in a complete cylindrical shape. The complete cylindrical shape described herein means a cylindrical shape in which a slit, a hole, or the like is not formed in a part thereof in the circumferential direction. That is, the "cylindrical shape" in the disclosure includes a shape in which a slit, a hole, or the like is formed in a part thereof in the circumferential direction.

In the embodiments, the example has been described in which the entire through-hole 11A of the shaft portion 11 is the screw hole (that is, the example in which the entire part of the through-holes 11A, 12A, and 13A corresponding to the body portion 11a and the second linking portion 11b is the screw hole), but the screw hole of the disclosure is not limited thereto. A part of the through-hole 11A of the shaft portion 11 may become the screw hole.

The screw hole (screw cutting) may be formed only in the through-hole 12A of the flange portion 12 without being formed in the through-hole 11A of the shaft portion 11. More specifically, the screw hole (screw cutting) may be formed in at least any one of the body portion, the second linking portion, or the second end portion.

In the embodiments, the example has been described in which the inner diameter r3 of the cylindrical caulking portion 13 is uniform in the axial direction, but the disclosure is not limited thereto. The inner diameter r3 of the cylindrical caulking portion 13 may increase toward the one side in the axial direction. In this case, the deformation of the caulking portion 13 to cause the radially inward expansion can be curbed.

In the embodiments, the example has been described in which the fastening member 10 is inserted from the second hole 24 side into the bonding target object (the automobile member 20) in which the relative positions of the first plate portion 21A and the second plate portion 22A are fixed so that the caulking preparation state can be realized. However, the disclosure is not limited thereto. First, the fastening member 10 may be disposed with respect to the first member 21, and then the second member 22 may be disposed to realize the caulking preparation state. In this case, as in a fastening member 110 shown in Figs. 7 and 8, parts of the fastening member 110 on both sides in the axial direction may be configured to be caulked.

The fastening member 110 shown in Fig. 7 includes a shaft portion 111, a one-side caulking portion 13 provided on one side of the shaft portion 111 in the axial direction, and an other-side caulking portion 13 provided on the other side of the shaft portion 111 in the axial direction. In other configurations, the configurations having the same functions and operations as those of the embodiments are denoted by the same reference numerals, and the description thereof will be omitted.

In this example, the entire shaft portion 111 corresponds to the "body portion", a distal portion 13a of the one-side caulking portion 13 corresponds to the "first end portion", a proximal portion 13b of the one-side caulking portion 13 corresponds to the "first linking portion", a distal portion 13a of the other-side caulking portion 13 corresponds to the "second end portion", and a proximal portion 13b of the other-side caulking portion 13 corresponds to the "second linking portion". Accordingly, such a fastening member 110 is also included in the fastening member of the aspect <1> described above.

In this example, not only the first end portion 13a and the first linking portion 13b but also the second end portion 13a and the second linking portion 13b are configured to be caulked by the caulking step. As shown in Fig. 7, in this example, a shape of a circumferential surface of the shaft portion 111 (body portion) is not uniform in the axial direction. The body portion of the disclosure also includes that having such a shape. That "the shape of the circumferential surface of the shaft portion 111 (body portion) is uniform in the axial direction" means that, for example, the outer diameter of the shaft portion 111 (body portion) is uniform in the axial direction.

In the embodiments, the example has been described in which an internal space (through-hole 13A) of the cylindrical caulking portion 13 is connected to the screw hole (through-hole 11A), but the disclosure is not limited thereto. The screw hole may be open only on the other side in the axial direction.

In the embodiments, since arc welding is not used for bonding the fastening member 10 to the automobile member 20, a time taken to perform the bonding can be significantly shortened as compared with the case of using the arc welding. Further, it is possible to avoid a problem of breakage at the time of automobile collision due to a welding defect or the like.

However, the bonded joint according to the disclosure is not limited thereto, and for example, the second linking portion and the second plate portion of the fastening member may be bonded by the arc welding.

In the embodiments, the example has been described in which the automobile member 20 which is the bonding target object has the closed cross-section structure, but the bonding target object and the automobile member of the disclosure are not limited to that having the closed cross-section structure.

In the embodiments, the through-hole 13A of the caulking portion 13 is not the screw hole, but may be the screw hole. In this case, inward bulging of the deformed caulking portion 13 may be curbed.

In the embodiments, an outer circumferential surface of the caulking portion 13 does not have the screw cutting. Since the screw cutting is not formed on the outer circumferential surface of the caulking portion 13, outward bulging of the deformed caulking portion 13 can be promoted as compared with the case in which the screw cutting is formed. As a result, the circumferential edge part of the first hole 23 in the first plate portion 21A can be sandwiched between the deformed caulking portion 13 and the body portion 11 from both sides in the axial direction.

In the embodiments, the example has been described in which the circumferential edge part of the first hole 23 in the first plate portion 21A is sandwiched between the first end surface 14 of the body portion 11a and the deformed caulking portion 13 (see Fig. 5). However, the disclosure is not limited thereto, and the circumferential edge part of the first hole 23 in the first plate portion 21A may be sandwiched between the body portion 11a and the deformed caulking portion 13. That is, the body portion 11a does not necessarily have the flat first end surface 14.

In the embodiments, the example has been described in which external shapes of the shaft portion 11, the flange portion 12, and the caulking portion 13 are the circular columnar shape. However, the disclosure is not limited thereto, and the outer shape of the shaft portion, the flange portion, or the caulking portion may be a polygonal columnar shape.

In the embodiments, the example has been described in which the inner diameter of the caulking portion 13 is uniform in the axial direction. However, the inner diameter of the cylindrical caulking portion 13 may gradually increase toward the one side in the axial direction, for example. As a result, the thickness of the caulking portion 13 may gradually decrease toward the one side in the axial direction.

### (Supplementary Note)

In addition to the above description, the following supplementary notes are further disclosed.
<1> A fastening member for screwing a bolt unit of a pintle hook, the fastening member including:
   a body portion having a screw hole formed to extend in an axial direction;
   a first end portion forming an end portion of the fastening member on the one side in the axial direction;
   a second end portion forming an end portion of the fastening member on another side in the axial direction;
   a first linking portion linking the body portion and the first end portion; and
   a second linking portion linking the body portion and the second end portion,
   in which a first end surface directed toward the one side in the axial direction is formed on an end surface of the body portion on the one side in the axial direction, and
   outer diameters of the first end portion and the first linking portion are smaller than an outer diameter of the body portion, and thicknesses of the first end portion and the first linking portion are smaller than a thickness of the body portion.
<2> The fastening member according to <1>,
   in which thicknesses of the second end portion and the second linking portion are larger than thicknesses of the first end portion and the first linking portion.
<3> The fastening member according to <1> or <2>,
   in which the second end portion has an outer diameter larger than outer diameters of the body portion and the second linking portion.
<4> The fastening member according to any one of <1> to <3>,
   in which a shape of a circumferential surface of the body portion is uniform in the axial direction.
<5> The fastening member according to any one of <1> to <3>,
   in which a shape of a circumferential surface of the body portion is uniform in the axial direction, and
   the outer diameter of the second end portion is larger than the outer diameter of the body portion.
<6> The fastening member according to any one of <1> to <5>,
   in which the first linking portion and the first end portion are formed in a cylindrical shape.
<7> The fastening member according to any one of <1> to <6>,
   in which a through-hole penetrating the first end portion, the first linking portion, the body portion, the second linking portion, and the second end portion in the axial direction is formed, and
   the screw hole is formed in a part of the through-holes corresponding to the body portion.
<8> The fastening member according to <7>,
   in which the screw hole is also formed in a part of the through-holes corresponding to the second linking portion.
<9> The fastening member according to any one of <6> to <8>,
   in which an inner diameter of the first linking portion is uniform in the axial direction,
   an inner diameter of the first end portion is uniform in the axial direction, and
   an inner diameter of the linking portion is the same as the inner diameter of the first end portion.
<10> The fastening member according to any one of <7> to <9>,
   in which a minimum value of the inner diameters of the first linking portion and the first end portion in the axial direction is larger than a maximum diameter of the screw hole.
<11> The fastening member according to any one of <7> to <10>,
   in which an inner diameter of the second end portion is larger than an inner diameter of the body portion, and
   an outer diameter of the second end portion is larger than an outer diameter of the body portion.
<12> A bonded joint including: a bonding target object; and a fastening member bonded to the bonding target object,
   in which the bonding target object has a first plate portion and a second plate portion facing the first plate portion,
   the first plate portion has a first hole, and the second plate portion has a second hole,
   the fastening member includes
   a body portion having a screw hole formed to extend in an axial direction,
   a first end portion forming an end portion of the fastening member on the one side in the axial direction,
   a second end portion forming an end portion of the fastening member on another side in the axial direction,
   a first linking portion linking the body portion and the first end portion; and
   a second linking portion linking the body portion and the second end portion,
   a first end surface directed toward the one side in the axial direction is formed on an end surface of the body portion on the one side in the axial direction,
   the first end portion is disposed on the one side in the axial direction with respect to the first plate portion,
   the second end portion is disposed on the other side in the axial direction with respect to the second plate portion,
   the first end surface is brought into contact with a circumferential edge part of the first hole in the first plate portion from the other side in the axial direction,
   the first end portion and the first linking portion are caulked deformed portions, and
   the circumferential edge part of the first hole in the first plate portion is sandwiched between the body portion and the deformed portion from both sides in the axial direction.
<13> The bonded joint according to <12>,
   in which the first hole has a circular shape.
<14> The bonded joint according to <12>,
   in which the first hole has a polygonal shape.
<15> A fastening member-attached automobile member including the bonded joint according to any one of <12> to <14>.
<16> The fastening member-attached automobile member according to <15>, including
   the automobile member having
   a closed cross-section structure in which a hat-shaped first plate and a substantially flat plate-shaped second plate are bonded to each other,
   in which the first plate has a top plate portion, a pair of vertical plate portions, and a pair of flange portions,
   the second plate has a facing portion facing the top plate portion and a pair of bonding portions bonded to the pair of flange portions,
   the top plate portion is the first plate portion,
   the facing portion is the second plate portion, and
   the first plate has a plate thickness larger than that of the second plate.
<17> A method for manufacturing a bonded joint in which a bonding target object and a fastening member are bonded to each other,
   in which the bonding target object has a first plate portion and a second plate portion facing the first plate portion,
   the first plate portion has a first hole, and the second plate portion has a second hole,
   the fastening member includes
   a body portion having a screw hole formed to extend in an axial direction,
   a first end portion forming an end portion of the fastening member on the one side in the axial direction,
   a second end portion forming an end portion of the fastening member on another side in the axial direction,
   a first linking portion linking the body portion and the first end portion; and
   a second linking portion linking the body portion and the second end portion,
   a first end surface directed toward the one side in the axial direction is formed on an end surface of the body portion on the one side in the axial direction,
   the method includes a first step and a second step,
   in the first step, a caulking preparation state is set in which the first end portion is disposed on the one side in the axial direction with respect to the first plate portion, the second end portion is disposed on the other side in the axial direction with respect to the second plate portion, and the first end surface is brought into contact with the circumferential edge part of the first hole in the first plate portion from the other side in the axial direction, and
   in the second step, the first end portion and the first linking portion are deformed by pressurizing the fastening member from both sides in the axial direction in the caulking preparation state to form a deformed portion, and a circumferential edge part of the first hole in the first plate portion is sandwiched between the body portion and the deformed portion from both sides in the axial direction.

The entire disclosure of Japanese Patent Application No. 2022-115114 filed on July 19, 2022 is incorporated herein by reference.

### Reference Signs List

- 10: Fastening member

- 11A, 12A, 13A: Through-hole
- 11: Shaft portion
- 11A: Through-hole (screw hole) of shaft portion
- 11a: General body portion (body portion) of shaft portion
- 11b: Proximal portion (second linking portion) of shaft portion
- 12: Flange portion (second end portion)
- 12A: Through-hole of flange portion
- 13: Caulking portion, Deformed portion
- 13A: Through-hole of caulking portion
- 13a: Distal portion (first end portion) of caulking portion
- 13b: Proximal portion (first linking portion) of caulking portion
- 14: First end surface
- 15: Second end surface
- 20: Automobile member (bonding target object)
- 21: First member
- 21A1: First surface
- 21A2: Second surface
- 21A: Top plate portion (first plate portion)
- 21B: Vertical plate portion
- 21C: Flange portion
- 22: Second member
- 22A: Facing portion (second plate portion)
- 22B: Bonding portion
- 23: First hole
- 24: Second hole
- 30: Fastening member-attached automobile member
- 40: Electrode
- R1: Outer diameter of shaft portion
- R2: Outer diameter of flange portion
- R3: Outer diameter of caulking portion
- R3a: Outer diameter of deformed portion
- d1: Diameter of first hole
- d2: Diameter of second hole
- r1: Inner diameter of shaft portion
- r2: Inner diameter of flange portion
- r3: Inner diameter of caulking portion
- r3a: Inner diameter of deformed portion

## Claims

1. A fastening member having a screw hole extending in an axial direction, the fastening member comprising:
a body portion extending in the axial direction;
a first end portion located at one side of the body portion in the axial direction;
a second end portion located at another side of the body portion in the axial direction;
a first linking portion that links the body portion and the first end portion; and
a second linking portion that links the body portion and the second end portion,
wherein the screw hole is provided in at least one of the body portion or the second end portion, and
in the axial direction,
a part of the body portion that is adj acent to the first linking portion and the first linking portion have outer diameters with different values,
outer diameters of the first end portion and the first linking portion are smaller than the outer diameter of the part of the body portion that is adjacent to the first linking portion,
a part of the body portion that is adjacent to the second linking portion and the second end portion have outer diameters with different values, and
thicknesses of the first end portion and the first linking portion, as viewed in the axial direction, are smaller than a thickness of the body portion.

2. The fastening member according to claim 1,
wherein thicknesses of the second end portion and the second linking portion are larger than the thicknesses of the first end portion and the first linking portion.

3. The fastening member according to claim 1 or 2,
wherein, in the axial direction, an outer diameter of a part of the second end portion that is adjacent to the second linking portion is larger than outer diameters of the part of the body portion that is adjacent to the second linking portion and the second linking portion.

4. The fastening member according to claim 1,
wherein, in the axial direction, outer diameters of a part of the second end portion that is adjacent to the second linking portion and the second linking portion are smaller than an outer diameter of the part of the body portion that is adjacent to the second linking portion, and
the thicknesses of the second end portion and the second linking portion, as viewed in the axial direction, are smaller than the thickness of the body portion.

5. The fastening member according to claim 1 or 2,
wherein shapes of circumferential surfaces of the body portion and the second linking portion are uniform in the axial direction.

6. The fastening member according to claim 1 or 2,
wherein the body portion has a body through-hole that is a through-hole extending in the axial direction,
the first end portion and the first linking portion have a first through-hole communicating with the body through-hole in the axial direction,
a minimum value of a diameter of the first through-hole is larger than a maximum value of a diameter of the body through-hole, as viewed in the axial direction, and
in a case in which the body portion has the screw hole, a screw portion is provided in the body through-hole.

7. The fastening member according to claim 1 or 2,
wherein the body portion has a body through-hole that is a through-hole extending in the axial direction,
the second end portion and the second linking portion have a second through-hole communicating with the body through-hole in the axial direction,
a minimum value of a diameter of the second through-hole is larger than a maximum value of a diameter of the body through-hole, as viewed in the axial direction,
in a case in which the body portion has the screw hole, a screw portion is provided in the body through-hole, and
in a case in which the second end portion has the screw hole, a screw portion is provided in the second through-hole.

8. A bonded joint comprising: a bonding target object; and a fastening member bonded to the bonding target object,
wherein the bonding target object has a first plate portion and a second plate portion facing the first plate portion,
the first plate portion has a first hole,
the second plate portion has a second hole,
the fastening member is a fastening member having a screw hole extending in an axial direction and includes
a body portion extending in the axial direction,
a first end portion located at one side of the body portion in the axial direction,
a second end portion located at another side of the body portion in the axial direction,
a first linking portion that links the body portion and the first end portion, and
a second linking portion that links the body portion and the second end portion,
the screw hole is provided in at least one of the body portion or the second end portion,
the first end portion is disposed at the one side in the axial direction with respect to the first plate portion,
the second end portion is disposed at the other side in the axial direction with respect to the second plate portion,
the first linking portion is disposed inside the first hole,
the second linking portion is disposed inside the second hole,
the body portion is disposed between the first plate portion and the second plate portion, and
in the axial direction,
an outer diameter of the first linking portion is smaller than an outer diameter of a part of the body portion that is adjacent to the first linking portion,
a thickness of the first linking portion is smaller than a thickness of the part of the body portion that is adjacent to the first linking portion,
an outer diameter of the first end portion is larger than a diameter of the first hole,
a circumferential edge part of the first hole in the first plate portion is sandwiched between the body portion and the first end portion from both sides in the axial direction, and
an outer diameter of the second end portion is larger than a diameter of the second hole, and a circumferential edge part of the second hole is supported by the second end portion.

9. The bonded joint according to claim 8,
wherein an outer diameter of the second linking portion is smaller than an outer diameter of a part of the body portion that is adjacent to the second linking portion,
a thickness of the second linking portion is smaller than a thickness of the part of the body portion that is adjacent to the second linking portion,
the outer diameter of the second end portion is larger than the diameter of the second hole, and
the circumferential edge part of the second hole in the second plate portion is sandwiched between the body portion and the second end portion from both sides in the axial direction.

10. The bonded joint according to claim 8 or 9,
wherein the bonding target object is an automobile member,
the automobile member has a closed cross-section structure in which a hat-shaped first plate and a substantially flat plate-shaped second plate are bonded to each other,
the first plate has a top plate portion, a pair of vertical plate portions, and a pair of flange portions,
the second plate has a facing portion facing the top plate portion and a pair of bonding portions bonded to the pair of flange portions,
the top plate portion is the first plate portion,
the facing portion is the second plate portion, and
a plate thickness of the first plate is larger than a plate thickness of the second plate.

11. The bonded joint according to claim 8 or 9,
wherein the first hole has a polygonal shape.

12. A method for manufacturing a bonded joint in which a bonding target object and a fastening member are bonded to each other,
wherein the bonding target object has a first plate portion and a second plate portion facing the first plate portion,
the first plate portion has a first hole, and the second plate portion has a second hole,
the fastening member includes
a screw hole extending in an axial direction,
a body portion extending in the axial direction,
a first end portion located at one side of the body portion in the axial direction,
a second end portion located at another side of the body portion in the axial direction,
a first linking portion that links the body portion and the first end portion, and
a second linking portion that links the body portion and the second end portion,
the screw hole is provided in at least one of the body portion or the second end portion,
a part of the body portion that is adj acent to the first linking portion and the first linking portion have outer diameters with different values,
outer diameters of a part of the first end portion that is adjacent to the first linking portion and the first linking portion are smaller than the outer diameter of the part of the body portion that is adjacent to the first linking portion,
a part of the body portion that is adjacent to the second linking portion and the second end portion have outer diameters with different values, and
thicknesses of the first end portion and the first linking portion, as viewed in the axial direction, are smaller than a thickness of the body portion,
the method comprising: a step of preparing the bonding target object and the fastening member; a first step; and a second step,
wherein, in the first step:
the first end portion is disposed at the one side in the axial direction with respect to the first plate portion,
the second end portion is disposed at the other side in the axial direction with respect to the second plate portion,
the first linking portion is disposed inside the first hole,
the second linking portion is disposed inside the second hole,
the body portion is disposed between the first plate portion and the second plate portion,
the part of the body portion that is adjacent to the first linking portion is brought into contact with a circumferential edge part of the first hole in the first plate portion from the other side in the axial direction, and
a caulking preparation state is set in which a part of the second end portion that is adjacent to the second linking portion is brought into contact with a circumferential edge part of the second hole in the second plate portion from the other side in the axial direction, or the part of the body portion that is adjacent to the second linking portion is brought into contact with the circumferential edge part of the second hole in the second plate portion from the one side in the axial direction; and
wherein, in the second step, the first end portion is deformed by energizing, heating, and pressurizing the fastening member from both sides in the axial direction in the caulking preparation state to form a deformed portion, and the circumferential edge part of the first hole in the first plate portion is sandwiched between the body portion and the deformed portion from both sides in the axial direction.

13. The method for manufacturing a bonded joint according to claim 12,
wherein:
in the fastening member:
an outer diameter of the part of the second end portion that is adjacent to the second linking portion is larger than outer diameters of the part of the body portion that is adjacent to the second linking portion and the second linking portion, and
an outer diameter of the second end portion is larger than a diameter of the second hole; and
in the caulking preparation state:
the part of the second end portion that is adjacent to the second linking portion is brought into contact with the circumferential edge part of the second hole in the second plate portion from the other side in the axial direction.

14. The method for manufacturing a bonded joint according to claim 12,
wherein:
in the fastening member:
outer diameters of the part of the second end portion that is adjacent to the second linking portion and the second linking portion are smaller than an outer diameter of the part of the body portion that is adjacent to the second linking portion, and
thicknesses of the second end portion and the second linking portion, as viewed in the axial direction, are smaller than the thickness of the body portion,
in the caulking preparation state,
the part of the body portion that is adjacent to the second linking portion is brought into contact with the circumferential edge part of the second hole in the second plate portion from the one side in the axial direction; and
in the second step:
further, the second end portion is deformed by energizing, heating, and pressurizing the fastening member from both sides in the axial direction in the caulking preparation state to form a second deformed portion, and the circumferential edge part of the second hole in the second plate portion is sandwiched between the body portion and the second deformed portion from both sides in the axial direction.
